# EUROPÄISCHE PATENTSCHRIFT

(11) **EP 4 124 236 B1**
(45) Veröffentlichungstag und Bekanntmachung des Hinweises auf die Patenterteilung: **28.08.2024**
(21) Anmeldenummer: 22185443.3
(22) Anmeldetag: 18.07.2022
(51) Int. Cl.: A01D 78/10, A01D 78/18, A01D 80/00

(54) **SCHWADER MIT EINEM NEIGUNGSVERSTELLBAREN RECHKREISEL**
WINDROW WITH RAKE WITH ADJUSTABLE INCLINATION
ANDAINEUSE DOTÉE D'UN RÂTEAU ROTATIF À RÉGLAGE D'INCLINAISON

(30) Priorität: 27.07.2021 DE 102021119407
(43) Veröffentlichungstag der Anmeldung: 01.02.2023
(73) Patentinhaber: Maschinenfabrik Bernard Krone GmbH & Co. KG, 48480 Spelle (DE)
(72) Erfinder: HORSTMANN, Josef, 49479 Ibbenbüren (DE)

(56) Entgegenhaltungen:
- DE-A1- 19 619 172
- FR-A1- 2 137 369
- FR-A1- 2 707 450
- US-A- 5 502 959

## Beschreibung

Die vorliegende Erfindung betrifft einen Schwader mit
- einem um eine Rotationsachse drehbar vorgesehenen Rechkreisel, der Zinkenarme aufweist, an denen jeweils eine Vielzahl Zinken zum Erfassen von Halmgut angeordnet sind, und
- mit einem Fahrwerk, das einen Rahmen sowie wenigstens ein Paar Tasträder umfasst, und das zum Einstellen eines Abstandes des Rechkreisels vom Boden vorgesehen ist,
wobei am Rahmen ein Halter zum Befestigen des Rechkreisels am Fahrwerk angeordnet ist, der sich in Richtung der Rotationsachse erstreckt, und wobei der Rahmen wenigstens eine Strebe aufweist, an der wenigstens eines der Tasträder des Paares angeordnet ist. Die vorliegende Erfindung betrifft weiterhin ein Verfahren zur Neigungsverstellung eines Rechkreisels eines Schwaders.

Schwader dienen in der Landwirtschaft dazu, geschnittenes Gras oder Heu auf dem Feld zu Schwaden zusammen zu rechen. Ein gängiger Typ von Schwadern verwendet dafür einen oder mehrere jeweils um eine Rotationsachse rotierende Rechkreisel, bei denen jeweils eine Mehrzahl von Zinkenarmen um eine gemeinsame Rotationsachse rotiert. Jeder Zinkenarm trägt endseitig eine Mehrzahl von Zinken, die bodennah über das Feld geführt werden können und dabei das Halmgut erfassen. Das erfasste Halmgut wird über eine gewisse Wegstrecke von den Zinken mitgeführt, bevor es am Boden abgelegt wird.

Um den insbesondere pendelnd aufgehängten Rechkreisel in einem möglichst gleichbleibenden Abstand vom Boden zu führen, weisen Schwader ein Fahrwerk auf, das einen Rahmen sowie Tasträder umfasst. Der Rahmen bildet wenigstens eine Achse, wobei endseitig der Achse jeweils ein Tastrad am Rahmen befestigt ist.

Damit ein Schwad von nachfolgenden Erntemaschinen optimal aufgenommen werden kann, ist eine etwa kastenförmige Querschnittsform des Schwads vorteilhaft, so dass der Schwad an seinen Rändern möglichst steil ansteigt. Die Form des Schwads kann beeinflusst werden, indem eine Neigung des Rechkreisels eingestellt wird. Dadurch wird ein Abstand der Zinken des Rechkreisels beim Eintauchen in das am Boden liegende Halmgut sowie beim Ausheben aus dem Halmgut unterschiedlich eingestellt. Eine optimale Neigung ist zudem von der Art des Halmguts sowie ihrer Menge abhängig. Bei optimaler Neigung sollten die Zinken des Rechkreisels im äußeren Rechbereich, das heißt beim Eintauchen, einen größten Abstand vom Boden, und im inneren Rechbereich, das heißt beim Ausheben, den geringsten Abstand vom Boden aufweisen.

Bei herkömmlichen Schwadern kann die Neigung eingestellt werden, indem die Tasträder jeweils mittels eines Lochrasterblechs, dessen Löcher in vertikaler und/oder horizontaler Richtung zueinander versetzt sind, an einer als Achse dienenden Strebe befestigt sind. Dabei wird jeweils eines der Tasträder vom Lochrasterblech demontiert und in einem anderen Loch des Lochrasterblechs wieder befestigt. Dieser Vorgang ist, insbesondere auf dem Feld, aufwändig, und die optimale Neigung nur sehr schwer einstellbar. Er wird deshalb oftmals nicht durchgeführt und hingenommen, dass das beim Rechen entstehende Schwad keine optimale Form aufweist und ggf. sogar Ernteverluste entstehen.

Die Druckschriften FR 2 137 369 A1, DE 196 19 172 A1, US 5 502 959 A und FR 2 707 450 A1 offenbaren Heuwerbungsmaschinen, bei denen jeweils eine Neigung und/oder eine Höhe von Zinken eines Rechkreisels mit Hilfe eines Verstellmechanismus einstellbar ist.

Aufgabe der Erfindung ist es, einen zuverlässigen, weniger aufwändigen und, insbesondere auf dem Feld, schneller und einfacher durchführbaren Stellmechanismus für das Einstellen der Neigung des Rechkreisels des Schwaders vorzuschlagen.

Die Aufgabe wird gelöst mit einem Schwader mit den Merkmalen des unabhängigen Patentanspruchs 1 sowie einem Verfahren zur Neigungsverstellung des Rechkreisels des Schwaders mit den Merkmalen des unabhängigen Patentanspruchs 11. Vorteilhafte Ausführungsformen sind den abhängigen Ansprüchen entnehmbar.

Dafür wird ein Schwader geschaffen. Der Schwader ist allgemein dazu vorgesehen, Halmgut wie Gras oder Heu auf einem Feld zu erfassen und zu Schwaden zusammenzulegen. Er kann insbesondere dazu vorgesehen sein, von einer Zugmaschine oder einem Schlepper gezogen zu werden. Dabei kann er über eine Deichsel oder eine Dreipunkthubeinrichtung an den Schlepper angekoppelt sein.

Der Schwader weist wenigstens einen um eine Rotationsachse drehbar vorgesehenen Rechkreisel auf. Der Rechkreisel ist gegenüber dem Rahmen um die Rotationsachse drehbar. Die Antriebskraft für die Drehung kann vom Schlepper übertragen werden, z.B. über eine Zapfwelle. Anstelle nur eines einzigen Rechkreisels können auch mehrere solche Rechkreisel am Schwader angeordnet sein.

Üblicherweise weist der Rechkreisel eine Mehrzahl Zinkenarme auf. Die Zinkenarme weisen nach außen von der Rotationsachse ab. Jeder der Zinkenarme trägt jeweils eine Mehrzahl, insbesondere baugleiche, Zinken, wobei die Zinken zum Aufnehmen und Fördern von Halmgut entlang einer bodennahen, etwa kreisförmigen Bewegungsbahn vorgesehen sind. Optional kann jeder der Zinkenarme, oder jeweils ein Teil des Zinkenarms, mit dem die Zinken mit diesem verbunden sind, um seine Längsachse schwenkbar sein, so dass die Zinken abwechselnd in eine bodennahe Stellung sowie in eine bodenferne Stellung geschwenkt werden können.

Weiterhin weist der Schwader ein Fahrwerk auf, das einen Rahmen sowie wenigstens ein Paar Tasträder umfasst. Der Rahmen bildet eine Grundstruktur des Fahrwerks. Dabei sind die Tasträder jeweils über eine geeignete Aufhängung am Rahmen angebracht. Das Fahrwerk ist zum Einstellen eines Abstandes des Rechkreisels vom Boden vorgesehen. Dafür wird das Fahrwerk, insbesondere die Tasträder, am Boden geführt.

Zum Befestigen des Rechkreisels am Fahrwerk ist am Rahmen ein Halter angeordnet. Der Rechkreisel ist drehfest an einer Welle angeordnet, die sich in Richtung der Rotationsachse erstreckt, und drehbar, sowie ein- und ausfahrbar oder teleskopierbar im Halter gelagert ist. Die Höhe des Rechkreisels wird eingestellt, indem die Welle gegenüber dem Halter ein- oder ausgefahren oder teleskopiert wird. Im Betrieb liegt der Rechkreisel mit seinem Gewicht auf dem Fahrwerk auf, wobei das Fahrwerk mit seinen Tasträdern auf dem Boden aufsteht. Dadurch wird der Rechkreisel bei Bodenunebenheiten angehoben oder abgesenkt, so dass er im Betrieb des Schwaders in der eingestellten Höhe relativ zum Boden geführt wird.

Der Rahmen weist zudem wenigstens eine Strebe auf, an der eines der Tasträder des Paares angeordnet ist, oder beide Tasträder des Paares angeordnet sind. In letztgenannten Fall kann die Strebe als Radachse dienen, die endseitig jeweils ein Tastrad trägt, oder es kann eine Radachse an der Strebe, insbesondere pendelnd, befestigt sein.

Der Schwader zeichnet sich dadurch aus, dass die Strebe zumindest teilweise biegeelastisch ausgebildet ist, und der Rahmen ein Verstellmittel zum Beaufschlagen einer Druckkraft oder einer Zugkraft auf die Strebe aufweist, wobei sich die Strebe durch Verstellen des Verstellmittels elastisch biegt, wobei sich eine Anordnung des wenigstens einen Tastrades oder der Tasträder des Paares zum Halter ändert, und sich der Halter relativ zum Boden neigt.

Die zumindest teilweise biegeelastische Strebe ist ein Rahmenbauteil, welches sich in eine Längserstreckung erstreckt, das heißt länglich ausgebildet ist. Die Strebe ist in Längserstreckung wenigstens in einem oder mehreren Teilbereichen, oder entlang ihrer gesamten Länge elastisch biegbar. Gegenüber wenigstens einem weiteren Rahmenbauteil des Rahmens weist die Strebe eine höhere Biegeelastizität auf. Das heißt, dass sich bei Aufbringen einer Druck- oder Zugkraft desselben Betrages, insbesondere quer zur Längserstreckung, zwar die Strebe, nicht aber das weitere Rahmenbauteil biegt.

Um dem Rahmen eine ausreichende Stabilität zu verleihen, ist das weitere Rahmenbauteil, insbesondere im Vergleich zur Strebe, biegesteif ausgebildet. Ein solches weiteres Rahmenbauteil ist beispielsweise der Halter oder das Verstellmittel. Aufgrund ihrer Biegesteifigkeit biegt sich das weitere Rahmenbauteil, insbesondere biegen sich der Halter und/oder das Verstellmittel, auch unter einer hohen Belastung nicht. Das heißt, dass das weitere Rahmenbauteil unter normalen Umständen im Wesentlichen formstabil ist.

In einer bevorzugten Ausführungsform ist die Strebe aus einem endlosen Flachbandmaterial, insbesondere einem Blech, hergestellt. In einer ebenso bevorzugten Ausführungsform ist sie aus einem im Querschnitt rechteckigen Vierkantrohr oder Rundrohr hergestellt. In diesen Ausführungsformen ist die Strebe entlang ihrer Längserstreckung elastisch biegbar.

Damit eine solche Strebe nur in einem oder in mehreren Teilbereichen biegeelastisch ausgebildet ist, können, insbesondere endseitig der Strebe und/oder mittig der Strebe, Verstärkungsmittel wie beispielsweise Sicken und/oder Bleche angeordnet sein, so dass die Strebe im Bereich der Verstärkungsmittel weniger biegeelastisch ausgebildet ist als in dem oder den unverstärkten Teilbereichen. Bei einer aus einem Rohr gefertigten Strebe kann eine Verstärkung in einem Teilbereich auch dadurch realisiert sein, dass die Strebe im verstärkten Teilbereich durch ein Material gefüllt, und im unverstärkten Bereich hohl ist. Weiterhin kann die Verstärkung durch eine dickere Wandstärke realisiert sein. Prinzipiell kann die Verstärkung auch durch Verwendung verschiedener Herstellungsmaterialien oder Materialzusammensetzungen realisiert sein.

Das Verstellen des Verstellmittels bewirkt, dass die Strebe mit einer Zug- oder Druckkraft beaufschlagt wird, so dass sie sich elastisch biegt. Die Zug- oder Druckkraft weist dafür eine Erstreckungskomponente quer zur Längserstreckung der Strebe auf.

Dabei ändert sich eine Anordnung, insbesondere ein Winkel und/oder ein Abstand, des einen an der Strebe angeordneten Tastrades, oder der beiden Tasträder des Paares, zum Halter. Insbesondere kann sich dabei ein Abstand des wenigstens einen Tastrades, oder der beiden Tasträder des Paares, vom Halter verringern. Dabei neigt sich der Halter relativ zum Boden. Da der Halter sich in Richtung der Rotationsachse des Rechkreisels erstreckt, neigt sich dabei auch der Rechkreisel.

Dabei ist es bevorzugt, dass die Strebe, ausgehend von einem Grundzustand, in dem sie nicht biegeelastisch verbogen, das heißt unverbogen ist, durch Verstellen des Verstellmittels elastisch in einen Biegezustand gebogen wird. Bei verstelltem Verstellmittel hält dieses die Strebe im gebogenen Biegezustand. Aufgrund ihrer Elastizität ist die Strebe durch Zurückstellen des Verstellmittels vom Biegezustand ausgehend in den Grundzustand zurück verformbar.

Im Grundzustand ist der Halter, und mit ihm die Rotationsachse, im Wesentlichen in eine Hochrichtung, die sich quer zum Boden erstreckt, ausgerichtet. Dadurch ist der Rechkreisel im Wesentlichen bodenparallel angeordnet. Weiterhin erstrecken sich dadurch die Zinkenarme im Wesentlichen bodenparallel. Durch die Neigung des Halters im Biegezustand der Strebe erstreckt sich der Halter, und mit ihm die Rotationsachse, in einem Neigungswinkel ungleich 90° zum Boden. Dadurch ist der Rechkreisel im Biegezustand gegenüber der bodenparallelen Anordnung, die er im Grundzustand einnimmt, geneigt. Sofern die Zinken nicht um die Zinkenarme verschwenkt sind, sondern sich in einem gegen die Hochrichtung zum Boden gerichteten Verlauf hin erstrecken, weisen sie im Grundzustand etwa denselben Abstand zum Boden auf. Durch die Neigung des Rechkreisels im Biegezustand ist ihr Abstand vom Boden hingegen unterschiedlich.

Durch Verstellen des Verstellmittels kann daher der Abstand der Zinken vom Boden eingestellt werden, und zwar so, dass das Halmgut beim Einstechen in einem äußeren Rechbereich sauber aufgenommen, und beim Abgeben in einem inneren Rechbereich sauber abgegeben wird. Die Form des Schwads wird dadurch optimiert, so dass er an seinen Rändern eine etwa kastenförmige Querschnittsform aufweist. Eine optimale Verwertung durch nachfolgende Erntemaschinen ist damit sichergestellt.

Die Strebe weist bevorzugt ein Strebenende auf, an dem wenigstens eines der Tasträder des Paares angeordnet ist. Es können aber auch beide Tasträder des Paares an gegenüberliegenden Strebenenden der Strebe angeordnet sein. Weiterhin ist eine Ausführungsform bevorzugt, bei der die beiden Tasträder des Paares an einer Radachse angeordnet sind, die am Strebenende, insbesondere pendelnd, gelagert ist.

Das Verstellmittel ist bevorzugt kontinuierlich verstellbar. In einer bevorzugten Ausführungsform ist es als ein längenveränderlicher, insbesondere teleskopierbarer, Verbindungsarm ausgeführt. Ganz besonders bevorzugt dient der Verbindungsarm als ein den Rahmen stabilisierendes Rahmenbauteil. Dafür ist der Verbindungsarm bevorzugt, insbesondere im Vergleich zur Strebe, biegesteif ausgebildet. Es sind aber auch andere Verstellmittel bevorzugt, die dem Rahmen keine Stabilität verleihen (können), beispielsweise ein Zugseil. Weiterhin kann als Verstellmittel zum Biegen der Strebe ein Verstellmechanismus vorgesehen sein, der eine insbesondere punktuelle Druckraft auf die Strebe ausübt, beispielsweise mittels eines ein- und ausfahrbaren Bolzens, so dass sich diese dadurch biegt.

Zum Verändern der Länge, insbesondere zum Teleskopieren, des Verbindungsarms weist dieser in einer bevorzugten Ausführungsform eine Gewindestange oder eine Spindel auf. Dabei wird die Länge des Verbindungsarms besonders bevorzugt durch Drehen einer oder mehrerer Muttern entlang der Gewindestange oder der Spindel eingestellt. Gewindestangen, Spindeln und/oder Muttern sind einerseits Standardbauteile im Maschinenbau und daher sehr kostengünstig. Das Drehen einer Mutter entlang einer Gewindestange oder Spindel ist zudem für den Bediener sehr einfach durchführbar. Weiterhin lässt es ein kontinuierliches Verstellen und daher ein Feineinstellen um einen definierten und/oder gegebenenfalls sehr kleinen Betrag zu.

In einer bevorzugten Ausführungsform bilden der Halter, der Verbindungsarm und die Strebe im Grundzustand, in einer Projektion dieser Bauteile in eine Ebene, ein rechtwinkeliges Dreieck. Diese Anordnung ermöglicht bereits bei einer sehr geringen Längenänderung des Verbindungsarms von weniger als 20mm, vorzugsweise von weniger als 10mm, eine Biegung der Strebe, die eine ausreichende Neigung des Rechkreisels bewirkt. Dies ist durch Drehen einer Mutter entlang der Gewindestange oder Spindel mit wenigen Umdrehungen, insbesondere 2 - 5 Umdrehungen, erreichbar.

Im Folgenden werden die Begriffe Verbindungsarm und Verstellmittel synonym verwendet.

Zum Anbinden des Verstellmittels an die Strebe weist dieses einenends einen Strebenanschluss auf, und zum Anbinden an den Rahmen anderenends einen Rahmenanschluss. Der Strebenanschluss ist bevorzugt, direkt oder indirekt, am Strebenende der Strebe angeordnet. Besonders bevorzugt ist dafür am Strebenende eine erste Verbindungsplatte vorgesehen, an der nicht nur das Verstellmittel und die Strebe, sondern auch das Tastrad befestigt sind. Vorteilhaft, insbesondere lösbar, können die Strebe, das Verstellmittel und/oder das Tastrad dafür an der ersten Verbindungsplatte angeschraubt sein.

Der Rahmenanschluss ist bevorzugt an einem, insbesondere biegesteifen, Rahmenbauteil befestigt. Dadurch kann sich das Verstellmittel beim Ausüben der Zug- oder Druckkraft am Rahmen abstützen. In einer besonders bevorzugten Ausführungsform ist das Rahmenbauteil der Halter. Dabei ist es weiterhin bevorzugt, dass der Rahmen dafür eine zweite Verbindungsplatte aufweist, an der der Rahmenanschluss befestigt, insbesondere angeschraubt, ist. Dabei kann der Halter die zweite Verbindungsplatte durchsetzen. Prinzipiell kann aber auch eine direkte Anbindung des Verstellmittels an den Halter vorgesehen sein, beispielsweise eine Schweißverbindung.

In einer bevorzugten Ausführungsform weist das Fahrwerk ein weiteres Tastrad oder ein weiteres Tastradpaar auf, welches zum Einstellen eines Abstandes des Rechkreisels vom Boden vorgesehen ist, wobei der Rahmen eine weitere zumindest teilweise biegeelastisch ausgebildete Strebe aufweist, an dem das weitere Tastrad oder Tastradpaar angeordnet ist. Zur Unterscheidung der Streben ist die vorbeschriebene Strebe im Folgenden auch als erste Strebe oder Querstrebe bezeichnet, und die weitere Strebe auch als zweite Strebe oder Längsstrebe.

Zum elastischen Biegen der Längsstrebe ist bevorzugt ebenfalls ein Verstellmittel vorgesehen, insbesondere ein Verbindungsarm. Auch die Längsstrebe mit dem Verstellmittel ermöglicht das Neigen des Halters in der bereits beschriebenen Art und Weise. Dabei kann die Anbindung des Tastrades oder Tastradpaares an die Längsstrebe und/oder das Verstellmittel, und/oder die Anbindung der Längsstrebe und/oder des Verstellmittels an den Halter in analoger Art und Weise erfolgen, wie bereits bei der (Quer-) Strebe beschrieben.

Dabei ist es besonders bevorzugt, dass die zweite Strebe in einem Winkel > 0° zur ersten Strebe angeordnet ist. Dadurch können mit der zweiten Strebe andere Neigungswinkel des Rechkreisels relativ zum Boden eingestellt werden, als mit der ersten Strebe. Zudem ist durch Biegen beider Streben eine Überlagerung der mit diesen jeweils einstellbaren Neigungswinkel möglich.

Bevorzugt sind die Streben in einem Winkel größer als 0°, vorzugsweise in einem Winkel von etwa 30° - 130°, besonders bevorzugt in einem Winkel von etwa 60°, 72° oder 90°, zueinander angeordnet. Dadurch überlagern sich die durch das Biegen der ersten Strebe und zweiten Strebe bewirkten Neigungen des Halters. Ein tiefster Punkt des Rechkreisels ist dadurch in einem beliebigen Drehwinkel des Rechkreisels einstellbar.

In einer besonders bevorzugten Ausführungsform sind die beiden Streben quer zueinander, insbesondere T- förmig zueinander, angeordnet. Dabei ist die zweite Strebe vorzugsweise mittig der ersten Strebe an dieser befestigt. Es ist aber auch ein Fahrwerk bevorzugt, das eine sternförmige Anordnung mehrerer Streben aufweist, die endseitig jeweils ein Tastrad oder Tastradpaar tragen, wobei einem Tastrad oder einem Tastradpaar zum Biegen der Strebe jeweils ein Verstellmittel zugeordnet ist, insbesondere ein Verbindungsarm. Weiterhin kann auch eine etwa u- förmige oder v-förmige Anordnung von Streben und/oder Verstellmittel vorteilhaft sein.

Bei all diesen Ausführungsformen ist es bevorzugt, dass der Halter an einem Befestigungsmittel angeordnet ist, das zum Befestigen der Streben aneinander vorgesehen ist. Ein solches Befestigungsmittel kann vorteilhaft plattenförmig ausgebildet sein, so dass es eine Biegeelastizität aufweist, die das Neigen des (biegesteifen) Halters ermöglicht, und/oder zudem zum Verstärken und/oder Versteifen der Streben genutzt werden. Besonders bevorzugt ist das Befestigungsmittel als Befestigungsplatte (Blech) ausgebildet. Vorzugsweise ist es an die Streben angeschweißt oder angeklebt. Im Bereich der Befestigungsplatte sind die Streben dadurch weniger biegeelastisch als außerhalb dieses Bereiches. Bei einer durch ein Verstellmittel bewirkten Zug- oder Druckkraft biegen sich die Streben daher nicht im Bereich der Befestigungsplatte, sondern außerhalb dieses Bereiches.

Der Halter erstreckt sich bevorzugt quer zur Befestigungsplatte, wobei sich diese im Grundzustand weiterhin bevorzugt im Wesentlichen bodenparallel erstreckt. Beim Verstellen des Verstellmittels und Biegen der Strebe lässt die Biegeelastizität der Befestigungsplatte ein Neigen des Halters zu, ohne dass sich der Halter selbst biegt.

Bei einer ganz besonders bevorzugten Ausführungsform des Schwaders bildet eine erste der beiden Streben eine erste Radachse, insbesondere eine Hinterachse des Fahrwerks, an deren gegenüberliegenden Strebenenden jeweils ein Tastrad angeordnet ist, wobei jedem der beiden Tasträder jeweils ein Verstellmittel zum Biegen dieser Strebe zugeordnet ist, das sich vom Strebenende der Strebe ausgehend zum Halter erstreckt; und wobei an einer zweiten der beiden Strebe eine Radachse, insbesondere eine Vorderachse des Fahrwerks, weiter insbesondere im Wesentlichen mittig, angeordnet ist, der ein Verstellmittel zum Biegen der Strebe zugeordnet ist, die sich von einem Strebenende der Strebe ausgehend zum Halter erstreckt. Bei diesem Fahrwerk kann die Anordnung der Streben zueinander etwa T-förmig vorgesehen sein, wobei die erste der beiden Streben die Querstrebe, und die zweite der beiden Streben die Längsstrebe ist.

Bevorzugt kann es vorgesehen sein, eine Veränderung der Länge des Verstellmittels fernbedient vorzunehmen. Dazu kann dem Fahrwerk ein als Stellglied ausgebildetes Verstellmittel zugeordnet sein, welches durch die Ansteuerung mit hydraulischer, pneumatischer oder elektrischer Antriebsenergie die Länge des Verstellmittels verkürzt oder verlängert. Besonders bevorzugt ist es dabei ebenfalls möglich, dass die Ansteuerung des als Stellglied ausgeführten Verstellmittels über eine elektronische Steuereinrichtung durchgeführt wird, die von einem Maschinenbediener manuell oder selbsttätig über eine elektronische Steuereinrichtung eingeleitet wird, wobei die elektronische Steuereinrichtung dazu eingerichtet ist, über mit der Steuereinrichtung in Verbindung stehenden Sensoren und Erkennungsmittel Betriebsparameter des Schwaders zu erfassen, auszuwerten und diese dem Einstellprozess zugrunde zu legen.

Die Aufgabe wird weiterhin gelöst mit einem Verfahren zum Neigungsverstellen eines Rechkreisels eines solchen Schwaders, bei dem eine Strebe eines Rahmens eines Fahrwerks des Schwaders, das wenigstens ein Paar Tasträder umfasst und zum Einstellen eines Abstandes des Rechkreisels vom Boden vorgesehen ist, elastisch gebogen wird, so dass sich eine Anordnung eines der Tasträder oder beider Tasträder zu einem Halter, der zum Befestigen des Rechkreisels am Fahrwerk vorgesehen ist, ändert, und sich der Halter relativ zum Boden neigt.

Da der Halter die Welle des Rechkreisels aufnimmt, neigt sich mit dem Halter auch der Rechkreisel. Daher ist die Neigung des Rechkreisels durch Biegen der Strebe einstellbar.

Bevorzugt ist dafür am Fahrwerk ein Verstellmittel vorgesehen, das eine Zug- oder Druckkraft auf die Strebe ausübt, so dass sich diese biegt. Das Verstellmittel ist vorzugsweise als ein längenveränderlicher Verbindungsarm vorgesehen, wobei das Verändern der Länge des Verbindungsarms die Zug- oder Druckkraft auf die Strebe bewirkt.

Eine solche Veränderung der Länge des Verbindungsarms ist vom Bediener sehr schnell und einfach möglich. Weiterhin ist die Einstellung der Neigung, im Gegensatz zur Nutzung verschiedener Löcher eines Lochrasterblechs, kontinuierlich und daher sehr fein und genau möglich.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: in (a) eine perspektivische Darstellung eines erfindungsgemäßen Schwaders und in (b) eine Draufsicht auf den Schwader; und
- Fig. 2: in (a) und (b) jeweils eine perspektivische Ansicht des Fahrwerks des Schwaders der Fig. (1), und in (c) einen Ausschnitt aus Fig. 2 (b).

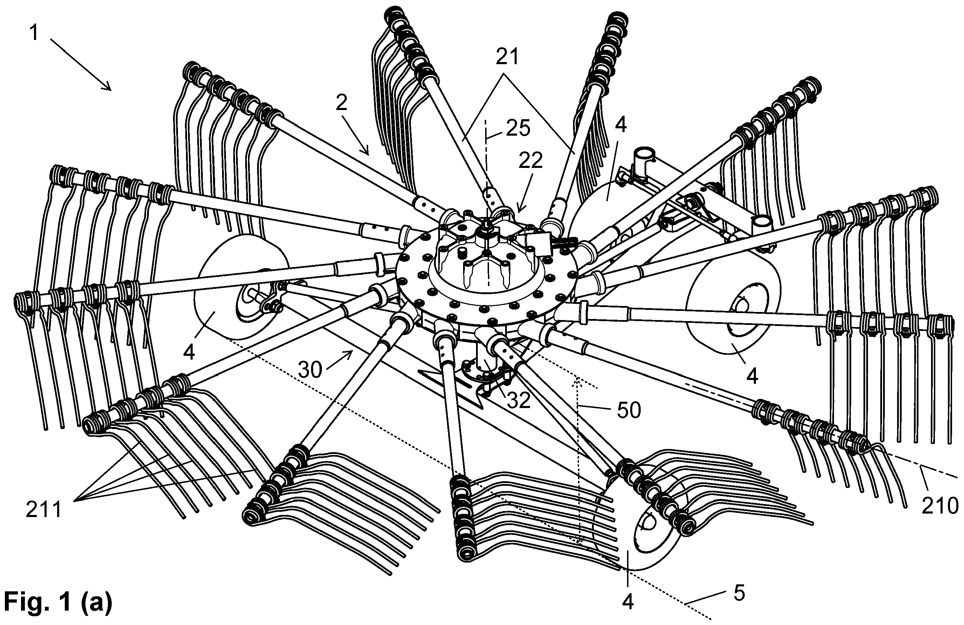

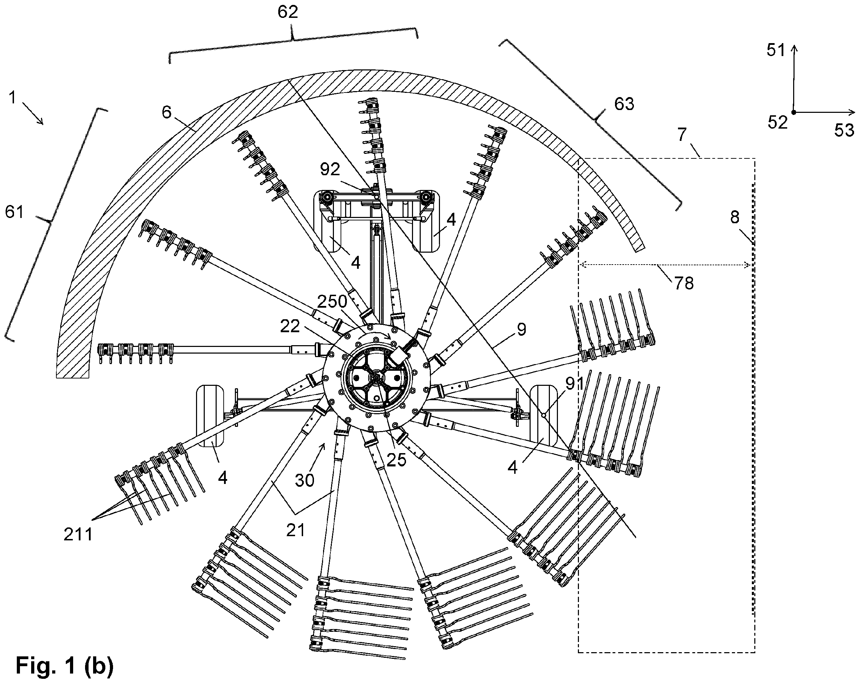

Fig. 1 zeigt einen Schwader 1, in diesem Fall einen Einkreiselschwader, gemäß der vorliegenden Erfindung, und zwar in Fig. 1 (a) in einer perspektivischen Darstellung und in Fig. 1 (b) in einer Draufsicht auf den Schwader 1. Der Schwader 1 weist einen Rechkreisel 2 zum Rechen des Ernteguts, sowie ein Fahrwerk 3 auf, wobei das Fahrwerk 3 auf dem Boden 5 aufsteht und den Rechkreisel 2 trägt. Der Boden 5 ist hier durch eine gestrichelte Linie schematisch dargestellt. An einem Rahmen 30 des Fahrwerks 3 ist der Rechkreisel 2 um eine Rotationsachse 25 bzw. Kreiselachse in eine Rotationsrichtung 250 drehbar gelagert. Die Erfindung ist aber nicht auf Einkreiselschwader beschränkt, sondern kann auch für Schwader 1 mit mehr als einem Rechkreisel 2 genutzt werden.

Der Rechkreisel 2 ist an einem Hauptrahmen (nicht gezeigt) aufgehängt, der, insbesondere mittels einer Deichsel (nicht gezeigt), an einen Schlepper (nicht gezeigt) anhängbar ist, um von diesem gezogen zu werden.

Das Fahrwerk 3 ist zum Einstellen eines Abstandes 50 des Rechkreisels 2 vom Boden 5 vorgesehen. Es wird in Fig. 1 beschrieben. Zum Einstellen des Abstandes 50 des Rechkreisels 2 vom Boden 5 ist dieser höhenverstellbar in einem Halter 32 des Rahmens 30 gelagert.

Der Rechkreisel 2 weist eine Mehrzahl von Zinkenarmen 21 auf, von denen jeder eine Mehrzahl von Zinken 211 trägt. In diesem Beispiel ist jeder Zinkenarm 21 um seine Längsachse 210, die sich in Richtung des Zinkenarms 21 erstreckt, drehbar, so dass im Zuge einer Rotation um die Rotationsachse 25 die Zinken 211 abwechselnd zwischen einer annähernd senkrechten Position, in dem sie sich in einem gegen eine Hochrichtung 52 zum Boden 5 gerichteten Verlauf hin erstrecken, und einer annähernd waagerechten Position gedreht werden. Der Rechkreisel 2 weist dafür ein Kreiselgetriebe 22 mit einer Zinkenarmführung (nicht gezeigt) auf, die beispielsweise durch eine Kurvenbahn (nicht gezeigt) erfolgen kann, wobei den Zinkenarmen 21 jeweils wenigstens eine Steuerrolle (nicht gezeigt) zugeordnet ist, die sich entlang der Kurvenbahn (nicht gezeigt) abrollt und dabei das Verdrehen der Zinkenarme 21 bewirkt.

In der annähernd senkrechten Position werden die Zinken 4 in Bodennähe geführt, so dass sie am Boden 5 befindliches Erntegut (nicht gezeigt), genauer gesagt Halmgut wie Gras oder Heu, erfassen und in Rotationsrichtung 250 des Rechkreisels 2 mitführen. Das Rechen kann dadurch in einem Rechbereich 61 - 63 erfolgen, der sich in etwa über den halben Rechkreisel 2 erstreckt und in dem sich die Zinken 211 in dem senkrechten, im Wesentlichen quer zum Boden 5 ausgerichteten Verlauf erstrecken. Außerhalb des Rechkreisels 2 tauchen die Zinken 211 nicht ausreichend weit in das Halmgut ein, um es zu erfassen.

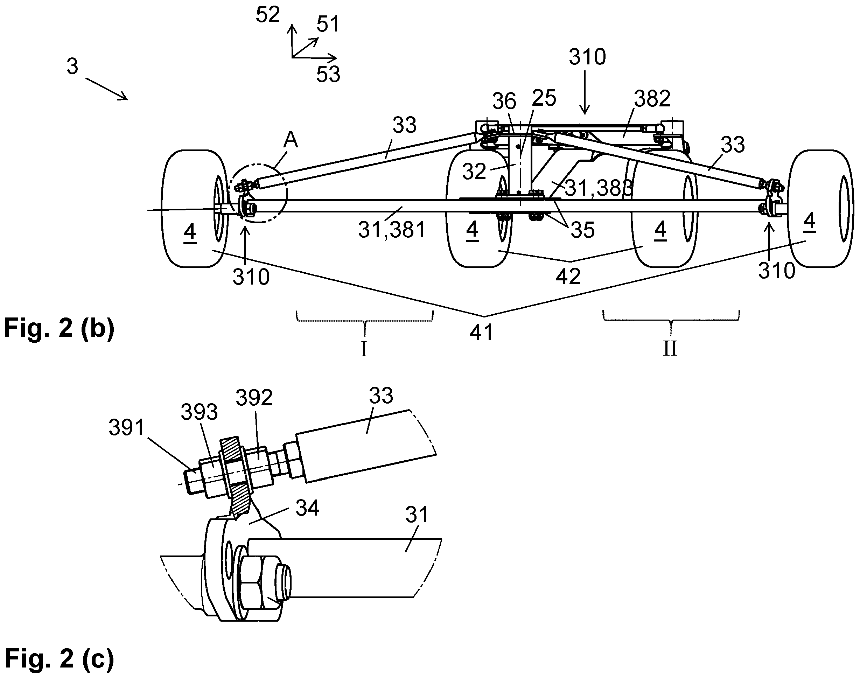

Während einer vollständigen Umdrehung des Rechkreisels 2 beim Rechen sollen die Zinken 211 in einem äußeren Rechbereich 61 in das am Boden 5 liegende Halmgut einstechen, und in einem inneren Rechbereich 63, in dem sie das Halmgut am Boden 5 ablegen, aus dem Halmgut abheben. In einem mittleren Rechbereich 62, d. h. in einem in Bezug auf eine Fahrtrichtung 51 des Schwaders 1 vorderen Bereich, sollen sie einen mittleren Zinkenabstand 6 zum Boden 5 aufweisen. Der optimierte Zinkenabstand 6 ist in Fig. 2b durch eine sich vom äußeren zum inneren Rechbereich 61 - 63 hin verjüngende bogenförmige Fläche schematisch dargestellt.

Das erfasste Halmgut wird dann im Rechbereich 61 - 63, das heißt über eine gewisse Wegstrecke, von den Zinken 211 mitgeführt, bevor es am Boden 5 abgelegt wird. Dabei kann ein Teil des Halmguts ab- bzw. hochgeschleudert werden, der an anderer Stelle wieder auf dem Feld landet.

Um einen Ablagebereich 7 (s. Fig. 2b) des Halmguts zu begrenzen, kann optional wenigstens ein Fangelement 8 (z.B. ein Pralltuch) vorgesehen sein, welches radial außerhalb der Bewegungsbahn der Zinken 211 angeordnet ist und in etwa senkrecht verläuft. Es kann z.B. als starre Platte oder Gitter oder insbesondere als flexibles Fangtuch bzw. Schwadtuch ausgebildet sein. Seine Funktion besteht darin, den Bewegungsraum des Halmguts zu begrenzen, das vom Rechkreisel 2 erfasst und hoch- bzw. fortgeschleudert wird. D.h. das Halmgut prallt gegen das Fangelement 8 und fällt in der Nähe desselben zu Boden 5.

Das Fangelement 8 kann mittels eines insbesondere etwa waagerecht verlaufenden Tragarms (nicht gezeigt) am Hauptrahmen des Schwaders 1 befestigt sein. Eine Länge des Tragarms kann dabei einstellbar vorgesehen sein, um das Fangelement 8 in unterschiedlicher radialer Entfernung von der Rotationsachse 25 zu positionieren und so eine Breite 78 des Schwads (nicht gezeigt) festzulegen.

Um eine Form des Schwads zu beeinflussen, und einen möglichst steilen Anstieg des Schwads an seinen Rändern zu erreichen, wird eine Neigung des Rechkreisels 2 dafür relativ zum Boden 5 eingestellt. Dadurch weisen die Zinken 211 in ihrer senkrechten Position, in der sie sich in dem gegen die Hochrichtung 52 zum Boden 5 gerichteten Verlauf hin erstrecken, im äußeren Rechbereich 61 den größten Zinkenabstand 6, und im inneren Rechbereich 63 den kleinsten Zinkenabstand 6 zum Boden 5 auf. Das Halmgut kann dadurch von den Zinken 211 im äußeren Rechbereich 61 sauber aufgenommen, im mittleren Rechbereich 62 mitgenommen und im inneren Rechbereich 63 sauber abgegeben werden, so dass die Form des Schwads optimiert ist und dieser den gewünschten steilen Anstieg am Abgaberand aufweist.

Die Neigung wird erfindungsgemäß durch wenigstens ein oder mehrere Verstellmittel 33 bewirkt, die die Streben 31 des Fahrwerks 3 so biegen, dass sich eine Anordnung, insbesondere ein Winkel und/oder ein Abstand, wenigstens eines oder mehrerer Tasträder 4 des Fahrwerks 3 zum Halter 32 des Rechkreisels 2 ändert, und sich dieser relativ zum Boden 5 neigt.

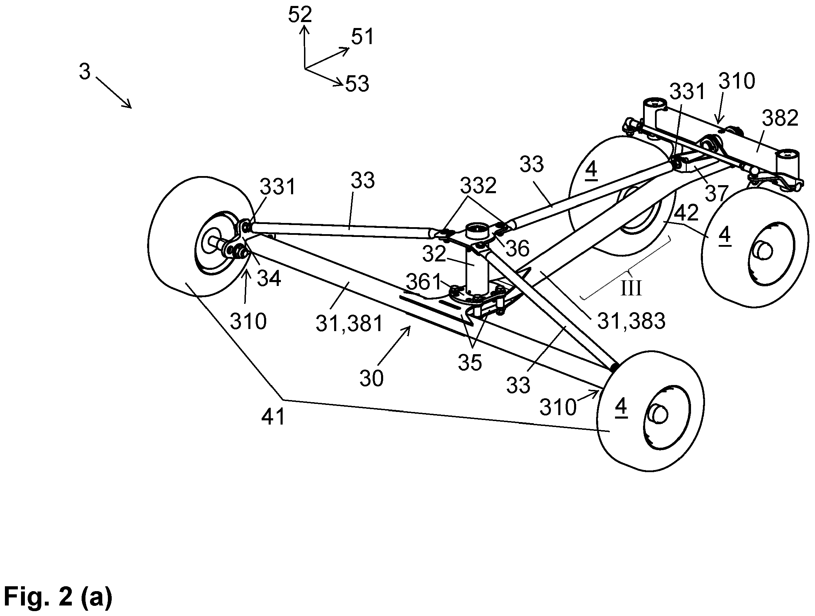

Dabei bewirkt das Biegen der Strebe 31 ein Neigen des Rechkreisels 2 um eine durch die Radaufstandspunkte 91, 92 verlaufende fiktive Linie 9, wie dies in der Fig. 1 (b) gezeigt ist. Analog zu der Darstellung in Fig. 1 (b) kann der Rechkreisel 2 auch um eine fiktive Linie (nicht dargestellt) in seiner Neigung verstellt werden, die spiegelbildlich zu der fiktiven Linie 9 in Bezug zur Fahrtrichtung 51 ausgerichtet ist. Ein Biegen einer in Fahrtrichtung 51 gerichteten Strebe 31 bewirkt somit analog zu den vorstehend beschriebenen Situationen eine Verstellung der Neigung des Rechkreisel 2 um eine ebenfalls in Fig. 1 (b) nicht dargestellte fiktive Linie, die quer zur Fahrtrichtung 51 ausgerichtet ist und zwischen den vorderen und hinteren Tasträdern 4 liegen würde. Beim Biegen mehrerer Streben 31 überlagern sich die dadurch bewirkten Neigungen des Rechkreisels 2. Dadurch ist ein tiefster Punkt des Rechkreisels 2, an dem die Zinken 211 in ihrer senkrechten Position den geringsten Zinkenabstand 6 vom Boden 5 aufweisen, in einem beliebigen Drehwinkel des Rechkreisels 2 einstellbar. Das Biegen der Streben 31 ist im Folgenden anhand der Fig. 2 beschrieben.

Fig. 2 zeigt das Fahrwerk 3 des Schwaders 1 der Fig. 1, und zwar in (a) und (b) jeweils in einer perspektivischen Ansicht, und in (c) einen Ausschnitt A aus Fig. 2 (b).

Das Fahrwerk 3 weist einen Rahmen 30 auf, der den Halter 32 sowie mehrere Streben 31 und Verstellmittel 33 umfasst. Zudem weist es zwei Paare 41, 42 Tasträder 4 auf.

Als Steben 31 weist der Rahmen 30 eine erste Strebe 31, im Folgenden auch Querstrebe genannt, sowie eine zweite Strebe 31, im Folgenden auch Längsstrebe genannt, auf. Die Längsstrebe erstreckt sich in Fahrtrichtung 51, und die Querstrebe in eine Querrichtung 53 quer zur Fahrtrichtung 51. Die Streben 31 sind aus einem im Querschnitt rechteckförmigen Vierkantrohr gefertigt. Sie weisen eine Längserstreckung auf und sind zumindest teilweise biegeelastisch ausgebildet. Dabei ist die Längsstrebe mittig der Querstrebe befestigt. Die Streben 31 sind bei diesem Fahrwerk 3 daher T- förmig zueinander angeordnet. Ein solches Fahrwerk 3 passt sich sehr gut der Bodenkontur an und weist ein stabiles und ruhiges Nachlaufverhalten auf.

Die Streben 31 sind zumindest teilweise biegeelastisch ausgebildet. Dadurch biegen sie sich bei Beaufschlagen mit einer Druckkraft oder einer Zugkraft elastisch. Dafür weist die Druckkraft oder Zugkraft eine quer zur Längserstreckung der jeweiligen Strebe 31 verlaufende Erstreckungskomponente auf, die das Biegen der Strebe bewirkt. Dadurch sind die Streben 31 jeweils von einem ungebogenen Grundzustand in einen gebogenen Biegezustand reversibel biegbar.

Zum Befestigen der Streben 31 aneinander weist das Fahrwerk 3 Befestigungsmittel 35 auf. Die Befestigungsmittel 35 sind aus einem Flachbandmaterial, hier aus einem Blech, gefertigt und plattenförmig ausgebildet. Sie sind im Folgenden auch als Befestigungsplatten 35 bezeichnet. Dabei sind in, Hochrichtung 52 betrachtet, eine obere Befestigungsplatte 35 und eine untere Befestigungsplatte 35 vorgesehen. Die Befestigungsplatten 35 sind jeweils einenends an der Querstrebe und anderenends an der Längsstrebe befestigt. Dafür sind sie hier jeweils an den Streben 31 angeschweißt. Dadurch verstärken sie die Streben 31 jeweils in dem Bereich, in dem sie an diesen angeschweißt sind. Im Falle der Längsstrebe verstärken sie ihr der Querstrebe zugewandtes Ende (nicht bezeichnet). Im Falle der Querstrebe verstärken sie diese mittig. Dadurch weisen die Streben 31 jeweils im verstärkten Bereich eine geringere Biegeelastizität auf als in einem unverstärkten Bereich I, II, III (s. auch Fig. 2 (b)).

Der Halter 32 ist an einer Oberseite (nicht bezeichnet) der oberen Befestigungsplatte 35 befestigt. Er ist hier verschraubt, wobei die Schrauben (nicht bezeichnet) sowohl die obere als auch die untere Befestigungsplatte 35 durchsetzen. Dafür weist der Halter 32 einen Flansch 361 auf.

Der Halter 32 ist im Vergleich zu den Streben 31 biegesteif ausgebildet. Daher biegt er sich auch unter einer hohen Belastung, insbesondere der auf die Streben 31 jeweils wirkenden und ihr Biegen verursachenden Zug- oder Druckbelastung, nicht.

Die Querstrebe dient bei diesem Fahrwerk 3 als Hinterachse 381. Im Folgenden werden daher die Begriffe Querstrebe und Hinterachse 381, synonym verwendet. An ihren gegenüberliegenden Enden 310 ist jeweils ein Tastrad 4 eines ersten Tastradpaares 41 der beiden Tastradpaare 41, 42 angeordnet. Im Folgenden sind die Enden 310 der Streben 31, an denen ein Tastrad 4 oder Tastradpaar 41, 42 angeordnet ist, auch als Strebenende 310 bezeichnet.

Zur Befestigung der Tasträder 4 jeweils an einem der gegenüberliegenden Strebenenden 310 der Querstrebe 381 ist eine erste Verbindungsplatte 34 vorgesehen. Die erste Verbindungsplatte 34 erstreckt sich bereichsweise quer zur Querstrebe 381. Zum Befestigen der Querstrebe 381 an der ersten Verbindungsplatte 34 ist an dieser, insbesondere in diesem Bereich, ein Einsteckrohrstück (nicht gezeigt) angeordnet, dass in die Querstrebe 381 einsteckbar ist. Das Einsteckrohrstück kann, beispielsweise durch Schrauben lösbar, oder durch Schweißen oder Kleben unlösbar, mit der Querstrebe 381 verbunden sein. Es weist Außenmaße auf, die Innenmaßen der Querstrebe 381 im Wesentlichen entsprechen. Dadurch ist die Querstrebe 381 im Bereich der Einsteckrohrstücke an ihren gegenüberliegenden Strebenenden 310 verstärkt. Aufgrund der mittigen Verstärkung der Querstrebe 381 durch die Befestigungsplatten 35 sowie der strebenendseitigen Verstärkungen durch die Einsteckrohrstücke weist die Querstrebe 381 zwei biegeelastische Bereiche I, II auf. In diesen Bereichen I, II ist sie durch eine Zug- oder Druckkraft, die eine quer zur Längserstreckung der Querstrebe 381 verlaufende Erstreckungskomponente aufweist, biegbar.

Die Längsstrebe dient als eine Art Auslegearm 383, an dem ein zweites Tastradpaar 42 der beiden Tastradpaare 41, 42 angeordnet ist. Im Folgenden werden daher die Begriffe Längsstrebe und Auslegearm 383, synonym verwendet. Das zweite Tastradpaar 42 ist dabei an einem der Querstrebe 381 abgewandten Strebenende 310 der Längsstrebe 383 angeordnet. Dabei trägt die Längsstrebe 383 hier eine als Vorderachse 382 dienende Radachse, an der das zweite Tastradpaar 42 befestigt ist. Dabei sind die beiden Tasträder 4 jeweils an gegenüberliegenden Enden der Vorderachse 382 angeordnet. Prinzipiell könnte an der Längsstrebe 382 aber auch nur ein einzelnes Tastrad 4 befestigt sein.

Zur Befestigung der Vorderachse 382 an der Längsstrebe 383 ist ein Haltemittel 37 vorgesehen. Das Haltemittel kann ein Pendeln der beiden Tasträder 4 des zweiten Tastradpaares 42 ermöglichen. Das Haltemittel 37 ist an der Längsstrebe 383 angeschweißt, und verstärkt diese daher im angeschweißten Bereich. Dadurch ist die Längsstrebe 383 an ihrem der Querstrebe 381 abgewandten Ende 310 weniger biegeelastisch, als im unverstärkten Bereich. Der unverstärkte, biegeelastische Bereich III der Längsstrebe 383 erstreckt sich hier daher aufgrund der angeschweißten Befestigungs- und Haltemittel 35, 37 mittig zwischen ihren gegenüberliegenden Enden.

Um die Zug- oder Druckkraft auf die Streben 31 auszuüben, weist das Fahrwerk 3 Verstellmittel 33 auf. Diese sind hier als längenveränderliche Verbindungsarme ausgebildet. Die Verbindungsarme 33 sind beispielsweise wenigstens größtenteils aus einem biegesteifen Rundrohr hergestellt. Daher biegen sie sich unter einer hohen Belastung, insbesondere unter einer auf die Streben 31 wirkenden und ihr Biegen verursachenden Zug- oder Druckkraft, nicht.

Einenends weisen die Verbindungsarme 33 jeweils einen Rahmenanschluss 332 auf, mit dem sie am Halter 32 befestigt sind. Am Halter 32 ist dafür eine zweite Verbindungsplatte 36 vorgesehen, die eine Durchgangsbohrung (nicht bezeichnet) aufweist, die der Halter 32 durchsetzt. Die Rahmenanschlüsse 332 der Verbindungsarme 33 sind an der zweiten Verbindungsplatte 36 befestigt, beispielsweise verschraubt.

Zum Anbinden der Verbindungsarme 33 jeweils an die Strebe 31 weisen diese an ihrem dem Rahmenanschluss 332 gegenüberliegenden Ende einen Strebenanschluss 331 auf. Der Strebenanschluss 331 ist jeweils am Strebenende 310 einer der Streben 31 befestigt. Dafür ist er an der ersten Verbindungsplatte 34 festgelegt, beispielsweise angeschraubt.

Jedem Tastrad 4 oder Tastradpaar 42 ist ein biegeelastischer Bereich I, II, III zugeordnet, mit dem die Strebe 31, an der das Tastrad 4 oder das Tastradpaar 42 angeordnet ist, biegbar ist.

Bei dem vorliegenden Fahrwerk 3 ist für jedes Tastrad des ersten Tastradpaares 41 jeweils ein biegeelastischer Bereich I, II der Querstrebe 381 vorgesehen. Weiterhin ist für das zweite Tastradpaar 42 der biegeelastische Bereich III der Längsstrebe 383 vorgesehen.

Für jedes an der Querstrebe 381 angeordnete Tastrad 4 des ersten Tastradpaares 41 ist ein biegeelastischen Bereiche I, II der Querstrebe 381, und für das zweite Tastradpaar 42 ist ein biegeelastischer Bereich III der Längsstrebe 383 vorgesehen. Die biegeelastischen Bereiche I, II, III sind dem Strebenende 310, an dem das jeweilige Tastrad 4 oder Tastradpaar 42 angeordnet ist, benachbart. Jedem der biegeelastischen Bereiche I, II, III ist weiterhin jeweils einer der Verbindungsarme 33 zugeordnet, mit dem die Strebe 31 in diesem Bereich I, II, III biegbar ist. Durch das Biegen des jeweiligen biegeelastischen Bereiches I, II, III ändert sich eine Anordnung des Tastrades 4 oder Tastradpaares 42 zum Halter 32. Dadurch neigt sich der Halter 32 relativ zum Boden.

In der dargestellten Ausführungsform des Fahrwerks 3 sind die Streben 31 im Grundzustand unverbogen. Das Verlängern eines der Verbindungsarme 33 bewirkt eine Druckkraft, durch die sich der diesem Verbindungsarm 33 zugeordnete biegeelastische Bereich I, II, III der Strebe 31 biegt. Zum Verlängern des Verbindungsarm ist eine Gewindestange 391 vorgesehen, die sich in das Rundrohr des Verbindungsarms 33 hinein erstreckt. Die Gewindestange 391 ist zum Verlängern des Verbindungsarms 33 aus dem Rundrohr herausdrehbar. Die Gewindestange 391 des Verbindungsarms 33 kann mittels Muttern 392, 393 befestigt werden. Ein Verkürzen des Verbindungsarms 33 wird durch ein Zurückdrehen der Gewindestange 391 bewirkt. Dieses Verkürzen bzw. Verlängern des Verbindungsarmes 33 ist in Fig. 2c veranschaulicht.

Dabei bestimmt der Betrag, um den der Verbindungsarm 33 verlängert ist, den Betrag der auf die Strebe 31 beaufschlagten Druckkraft. Dadurch ändert sich die Anordnung des zugeordneten Tastrades 4 oder Tastradpaares 42 zum Halter 32, wobei sich der Halter 32 relativ zum Boden 5 neigt. Die Strebe 31 befindet sich dann im Biegezustand. Da der Halter 32 sich in Richtung der Rotationsachse 25 des Rechkreisels 2 erstreckt, neigt sich dabei auch der Rechkreisel 2. Durch Festdrehen der Muttern kann der Halter 32 im Biegezustand festgestellt werden, so dass der Rechkreisel 2 seine Neigung beibehält.

Das Biegen eines der biegeelastischen Bereiche I, II der Querstrebe 381 bewirkt hier eine Querneigung des Rechkreisels 2, bei der sich dieser in Bezug auf die Fahrtrichtung 51 nach rechts oder links neigt. Eine Längsneigung, bei der sich der Rechkreisel 2 nach hinten neigt, kann durch Biegen des biegeelastischen Bereiches III der Längsstrebe 383 bewirkt werden.

Dabei ist eine ausreichende Neigung des Rechkreisels 2 bereits durch Verlängern oder Verkürzen der Gewindestange 391 um nur wenige Gewindedrehungen sehr einfach und schnell erreichbar.

## Patentansprüche

1. Schwader (1) mit
• einem um eine Rotationsachse (25) drehbar vorgesehenen Rechkreisel (2), der Zinkenarme (21) aufweist, an denen jeweils eine Vielzahl Zinken (211) zum Erfassen von Halmgut angeordnet sind, und
• mit einem Fahrwerk (3), das einen Rahmen (30) sowie wenigstens ein Paar Tasträder (4, 41, 42) umfasst, und das zum Einstellen eines Abstandes des Rechkreisels (2) vom Boden vorgesehen ist,
• wobei am Rahmen (30) ein Halter (32) zum Befestigen des Rechkreisels (2) am Fahrwerk (3) angeordnet ist, der sich in Richtung der Rotationsachse (25) erstreckt, und wobei der Rahmen (30) wenigstens eine Strebe (31) aufweist, an der wenigstens eines der Tasträder (4) des Paares (41, 42), oder beide Tasträder (4) des Paares (41, 42) angeordnet sind,
**dadurch gekennzeichnet, dass**
die Strebe (31) zumindest teilweise biegeelastisch ausgebildet ist, und der Rahmen (30) ein Verstellmittel (33) zum Beaufschlagen einer Druckkraft oder einer Zugkraft auf die Strebe (31) aufweist, wobei sich die Strebe (31) durch Verstellen des Verstellmittels (33) elastisch biegt, wobei sich eine Anordnung des wenigstens einen Tastrades (4) oder der Tasträder des Paares (41, 42) zum Halter (32) ändert, und sich der Halter (32) relativ zum Boden neigt.

2. Schwader (1) nach Anspruch 1, **dadurch gekennzeichnet, dass** die Strebe (31) ein Strebenende (310) aufweist, an dem wenigstens eines der Tasträder (4) des Tastradpaares (41, 42) angeordnet ist.

3. Schwader (1) nach einem der vorherigen Ansprüche, **dadurch gekennzeichnet, dass** das Verstellmittel (33) ein längenveränderlicher, insbesondere teleskopierbarer, Verbindungsarm ist.

4. Schwader (1) nach einem der vorherigen Ansprüche, **dadurch gekennzeichnet, dass** durch Verlängern des Verstellmittels (33) die Strebe (31) reversibel von einem Grundzustand ausgehend, in dem sie nicht biegeelastisch verbogen ist, in einen Biegezustand verstellbar ist, in dem sie elastisch verbogen ist.

5. Schwader (1) nach einem der vorherigen Ansprüche, **dadurch gekennzeichnet, dass** das Verstellmittel (33) einenends einen Strebenanschluss (331) und anderenends einen Rahmenanschluss (332) aufweist, wobei der Strebenanschluss (331) an dem Strebenende (310), und der Rahmenanschluss (332) an einem Rahmenbauteil, insbesondere am Halter (32), angeordnet sind.

6. Schwader (1) nach einem der vorherigen Ansprüche, **dadurch gekennzeichnet, dass** zum Befestigen des wenigstens einen Tastrades (4) und des Verstellmittels (33) am Strebenende (310) eine erste Verbindungsplatte (34), und/oder zum Befestigen des Verstellmittels (33) am Rahmenbauteil eine zweite Verbindungsplatte (36) vorgesehen sind.

7. Schwader (1) nach einem der vorherigen Ansprüche, **dadurch gekennzeichnet, dass** das Fahrwerk (3) ein weiteres Tastrad (4) oder ein weiteres Tastradpaar (41, 42) aufweist, welches zum Einstellen eines Abstandes des Rechkreisels (2) vom Boden vorgesehen ist, wobei der Rahmen (30) eine weitere zumindest teilweise biegeelastisch ausgebildete Strebe (31) aufweist, an dem das weitere Tastrad (4) oder Tastradpaar (42) angeordnet ist.

8. Schwader (1) nach Anspruch 7, **dadurch gekennzeichnet, dass** die beiden Streben (31) quer zueinander, insbesondere T- förmig zueinander, angeordnet sind.

9. Schwader (1) nach einem der Ansprüche 7 oder 8, **dadurch gekennzeichnet, dass** der Halter (32) an einem Befestigungsmittel (35) angeordnet ist, das zum Befestigen der beiden Streben (31) aneinander vorgesehen ist.

10. Schwader (1) nach einem der vorherigen Ansprüche, **dadurch gekennzeichnet, dass**
• Eine erste der beiden Streben (31) eine erste Radachse, insbesondere eine Hinterachse (381), bildet, an deren gegenüberliegenden Strebenenden (310) jeweils ein Tastrad (4) angeordnet ist, wobei jedem der beiden Tasträder (4) jeweils ein Verstellmittel (33) zum Biegen dieser Strebe (31) zugeordnet ist, das sich vom Strebenende (310) der Strebe (31) ausgehend zum Halter (32) erstreckt; und
• wobei an einer zweiten der beiden Strebe (31) eine Radachse, insbesondere eine Vorderachse (382), weiter insbesondere mittig, angeordnet ist, der ein Verstellmittel (33) zum Biegen dieser Strebe (31) zugeordnet ist, das sich von einem Strebenende (310) der Strebe (31) ausgehend zum Halter (32) erstreckt.

11. Schwader (1) nach einem der vorherigen Ansprüche, **dadurch gekennzeichnet, dass** das Fahrwerk (3) des Rechkreisels (2) als Verstellmittel (33) ein hydraulisch oder pneumatisch oder elektrisch fernbedienbares Stellglied aufweist.

12. Schwader (1) nach Anspruch 11, **dadurch gekennzeichnet, dass** zur Ansteuerung des hydraulisch oder pneumatisch oder elektrisch fernbedienbares Stellgliedes eine elektronische Steuereinrichtung vorgesehen ist, die dazu eingerichtet ist, eine Verstellung des Verstellmittels (33) in Abhängigkeit von durch Sensoren erfassten Betriebsparametern einzuleiten.

13. Verfahren zum Neigungsverstellen eines Rechkreisels (2) eines Schwaders (1) nach einem der vorherigen Ansprüche, bei dem eine Strebe (31) eines Rahmens (30) eines Fahrwerks (3) des Schwaders (2), das wenigstens ein Paar Tasträder (4, 41, 42) umfasst, und zum Einstellen eines Abstandes des Rechkreisels (2) vom Boden vorgesehen ist, elastisch gebogen wird, so dass sich eine Anordnung eines der Tasträder (4) oder beider Tasträder (4, 41, 42) zu einem Halter (32), der zum Befestigen des Rechkreisels (2) am Fahrwerk (3) vorgesehen ist, ändert, und sich der Halter (32) neigt.

## Claims

1. Swather (1) comprising
• a rotary rake (2), which is rotatable about a rotational axis (25) and which has tine arms (21), on each of which a plurality of tines (211) are arranged for grasping stalk material, and
• comprising a chassis (3), which comprises a frame (30) and at least one pair of roller feelers (4, 41, 42) and which is provided for setting a distance of the rotary rake (2) from the ground,
• wherein a holder (32) for fastening the rotary rake (2) to the chassis (3) is arranged on the frame (30) and extends in the direction of the rotational axis (25), and wherein the frame (30) has at least one strut (31) on which at least one of the roller feelers (4) of the pair (41, 42) or both roller feelers (4) of the pair (41, 42) are arranged,
**characterized in that**
the strut (31) is designed to be at least partially resiliently flexible, and the frame (30) comprises an adjusting means (33) for applying a compressive force or a tensile force to the strut (31), wherein the strut (31) bends resiliently by adjusting the adjusting means (33), wherein an arrangement of the at least one roller feeler (4) or the roller feelers of the pair (41, 42) relative to the holder (32) changes, and the holder (32) inclines relative to the ground.

2. Swather (1) according to claim 1, **characterized in that** the strut (31) has a strut end (310) on which at least one of the roller feelers (4) of the roller feeler pair (41, 42) is arranged.

3. Swather (1) according to any of the preceding claims,
**characterized in that** the adjusting means (33) is a length-variable, in particular telescopic, connecting arm.

4. Swather (1) according to any of the preceding claims,
**characterized in that** by extending the adjusting means (33) the strut (31) can be reversibly adjusted from a basic state, in which it is not flexurally resiliently bent, into a bending state, in which it is resiliently bent.

5. Swather (1) according to any of the preceding claims,
**characterized in that** the adjusting means (33) has a strut connection (331) at one end and a frame connection (332) at the other end, wherein the strut connection (331) is arranged on the strut end (310), and the frame connection (332) is arranged on a frame component, in particular on the holder (32).

6. Swather (1) according to any of the preceding claims,
**characterized in that** a first connecting plate (34) is provided for fastening the at least one roller feeler (4) and the adjusting means (33) to the strut end (310), and/or a second connecting plate (36) is provided for fastening the adjusting means (33) to the frame component.

7. Swather (1) according to any of the preceding claims, **characterized in that** the chassis (3) has a further roller feeler (4) or a further roller feeler pair (41, 42) which is provided for setting a distance of the rotary rake (2) from the ground, wherein the frame (30) has a further at least partially flexurally resilient strut (31) on which the further roller feeler (4) or roller feeler pair (42) is arranged.

8. Swather (1) according to claim 7, **characterized in that** the two struts (31) are arranged transversely to one another, in particular in a T-shape relative to one another.

9. Swather (1) according to any of claims 7 or 8, **characterized in that** the holder (32) is arranged on a fastening means (35) which is provided for fastening the two struts (31) to one another.

10. Swather (1) according to any of the preceding claims, **characterized in that**
• a first of the two struts (31) forms a first wheel axle, in particular a rear axle (381), at each of the opposite strut ends (310) of which a roller feeler (4) is arranged, wherein each of the two roller feelers (4) is assigned an adjusting means (33) for bending this strut (31), which adjusting means extends from the strut end (310) of the strut (31) to the holder (32); and
• wherein a wheel axle, in particular a front axle (382), is arranged, more particularly centrally, on a second of the two struts (31), to which front axle an adjusting means (33) for bending this strut (31) is assigned, which adjusting means extends from a strut end (310) of the strut (31) to the holder (32).

11. Swather (1) according to any of the preceding claims, **characterized in that** the chassis (3) of the rotary rake (2) has a hydraulically or pneumatically or electrically remote-controllable actuator as adjustment means (33).

12. Swather (1) according to claim 11, **characterized in that** an electronic control device is provided for controlling the hydraulically or pneumatically or electrically remote-controllable actuator and is designed to initiate an adjustment of the adjustment means (33) depending on operating parameters detected by sensors.

13. Method for adjusting the inclination of a rotary rake (2) of a swather (1) according to any of the preceding claims, in which a strut (31) of a frame (30) of a chassis (3) of the swather (2), which comprises at least one pair of roller feelers (4, 41, 42) and is provided for setting a distance of the rotary rake (2) from the ground, is resiliently bent so that an arrangement of one of the roller feelers (4) or both roller feelers (4, 41, 42) relative to a holder (32) provided for fastening the rotary rake (2) to the chassis (3) changes, and the holder (32) inclines.

## Revendications

1. Andaineuse (1) comprenant :
- un rotor de ratissage (2) monté à rotation autour d'un axe de rotation (25) et ayant des bras à dents (21) munis chacun de plusieurs dents (211) pour prendre les produits en tige et,
- un train de roulement (3) comprenant un châssis (30) ainsi qu'au moins une paire de roues de jauge (4, 41, 42) pour régler l'écart entre le rotor de ratissage (2) et le sol,
- le châssis (30) comportant un support (32) pour fixer le rotor de ratissage (2) au châssis (3) et qui est orienté dans la direction de l'axe de rotation (25) et,
- le châssis (30) comporte au moins une entretoise (31) munie d'au moins l'une des roues de jauge (4) de la paire (41, 42) ou des deux roues de jauge (4) de la paire (41, 42),
- andaineuse **caractérisée en ce que**
l'entretoise (31) est au moins en partie élastique en flexion et,
le châssis (30) comporte un moyen de réglage (33) pour appliquer une force de compression ou une force de traction à l'entretoise (31),
- l'entretoise (31) fléchissant élastiquement par le réglage du moyen de réglage (33) en modifiant la disposition d'au moins une roue de jauge (4) ou des roues de jauge de la paire de roues (41, 42) par rapport au support (32) qui s'incline par rapport au sol.

2. Andaineuse (1) selon la revendication 1,
**caractérisé en ce que**
l'entretoise (31) a une extrémité (310) munie d'au moins l'une des roues de jauge (4) de la paire de roues de jauge (41, 42).

3. Andaineuse (1) selon l'une des revendications précédentes,
**caractérisée en ce que**
le moyen de réglage (33) est un bras de liaison de longueur variable, notamment télescopique.

4. Andaineuse (1) selon l'une des revendications précédentes,
**caractérisée en ce que**
par l'allongement du moyen de réglage (33), l'entretoise (31), partant de manière réversible d'au moins un état de base dans lequel elle n'est pas cintrée de manière élastique en flexion passe vers un état de flexion dans lequel elle est cintrée élastiquement.

5. Andaineuse (1) selon l'une des revendications précédentes,
**caractérisée en ce que**
le moyen de réglage (33) comporte à une extrémité, un raccord d'entretoise (331) et à l'autre extrémité, un raccord de châssis (332),
- le raccord d'entretoise (331) étant à l'extrémité de l'entretoise (310) et le raccord de châssis (332) étant sur un composant du châssis, notamment le support (32).

6. Andaineuse (1) selon l'une des revendications précédentes,
**caractérisée par**
une plaque de liaison (34) pour fixer au moins une roue de jauge (4) et le moyen de réglage (33) à l'extrémité (310) de l'entretoise, et/ou une seconde plaque de liaison (36) pour fixer le moyen de réglage (33) à la pièce de châssis.

7. Andaineuse (1) selon l'une des revendications précédentes,
**caractérisée en ce que**
le châssis (3) a une autre roue de jauge (4) ou une autre paire de roues de jauge (41, 42) pour régler l'écart entre le rotor de ratissage (2) et le sol,
- le châssis (30) ayant au moins une autre entretoise (31) au moins partiellement élastique en flexion et munie de l'autre roue de jauge (4) ou de l'autre paire de roues de jauge (42).

8. Andaineuse (1) selon la revendication 7,
**caractérisée en ce que**
les deux entretoises (31) sont orientées transversalement l'une par rapport à l'autre, notamment en forme de T.

9. Andaineuse (1) selon l'une des revendications 7 ou 8,
**caractérisée en ce que**
le support (32) est sur un moyen de fixation (35) pour fixer les deux entretoises (31) l'une à l'autre.

10. Andaineuse (1) selon l'une des revendications précédentes, **caractérisée en ce que**
• la première des deux entretoises (31) forme un premier axe de roue notamment un axe arrière (381) muni d'une roue de jauge (4) respective sur deux extrémités d'entretoise (310) opposées,
chacune des deux roues de jauge (4) a un moyen de réglage (33) pour faire fléchir cette entretoise (31) et qui s'étend à partir de l'extrémité (310) de l'entretoise (31) vers le support (32), et
• la seconde des deux entretoises (31) comporte un axe de roue notamment l'axe avant (382) notamment en son milieu et auquel est associé un moyen de réglage (33) pour faire fléchir cette entretoise (31) et qui s'étend à partir d'une extrémité (310) de l'entretoise (31) vers le support (32).

11. Andaineuse (1) selon l'une des revendications précédentes, **caractérisée en ce que**
le châssis (3) du rotor de ratissage (2) comporte comme moyen de réglage (33) un organe de réglage hydraulique ou pneumatique ou à télécommande électrique.

12. Andaineuse (1) selon la revendication 11,
**caractérisée par**
une installation de commande électronique pour commander l'organe de réglage hydraulique ou pneumatique ou télécommander électriquement, pour faire le réglage du moyen de réglage (33) en commençant en fonction des paramètres de fonctionnement saisis par des capteurs.

13. Procédé de réglage de l'inclinaison d'un rotor de ratissage (2) d'une andaineuse (1) selon l'une des revendications précédentes,
selon lequel
une entretoise (31) d'un châssis (30) d'un train de roulement (3) de l'andaineuse (2) qui a au moins une paire de roues de jauge (4, 41, 42) et qui est prévue pour régler l'intervalle entre le rotor de ratissage (2) et le sol, est cintrée élastiquement de façon à modifier la disposition de l'une des roues de jauge (4) ou des deux roues de jauge (4, 41, 42) par rapport à un support (32) de fixation du rotor de raclage (2) au châssis (3) pour incliner le support (32).
